## Europäisches Patentamt
## European Patent Office
## Office européen des brevets

(11) Numéro de publication: **0 180 503**
**B1**

(12) 

# FASCICULE DE BREVET EUROPÉEN

(45) Date de publication du fascicule du brevet:
10.05.89

(51) Int. Cl.⁴: **F 16 L 37/28**

(21) Numéro de dépôt: **85401973.4**

(22) Date de dépôt: **10.10.85**

(54) **Raccord rapide perfectionné pour canalisations de fluide sous pression, et application d'un tel raccord au gonflage d'un réservoir.**

(30) Priorité: **11.10.84 FR 8415592**

(43) Date de publication de la demande:
**07.05.86 Bulletin 86/19**

(45) Mention de la délivrance du brevet:
**10.05.89 Bulletin 89/19**

(84) Etats contractants désignés:
**AT BE CH DE GB IT LI LU NL SE**

(56) Documents cité:
**DE-B-1 201 704**
**DE-B-1 201 705**
**FR-A-1 500 819**
**GB-A-1 239 908**
**US-A-2 415 701**
**US-A-2 753 195**
**US-A-3 236 251**

(73) Titulaire: **Forges de Belles Ondes, 8, rue Blanche, F-75009 Paris (FR)**

(72) Inventeur: **Faubeau, Edmond, 1, rue Gaetan Pirou, F-95580 Andilly (FR)**

(74) Mandataire: **Peuscet, Jacques, Cabinet Peuscet 68, rue d'Hauteville, F-75010 Paris (FR)**

LIBER, STOCKHOLM 1989

## Description

L'invention est relative à un raccord rapide pour canalisation de fluide sous pression, notamment d'air comprimé, du genre de ceux qui comprennent une partie mâle munie d'un clapet, reliée à une première canalisation, et une partie femelle, également munie d'un clapet, destinée à être reliée à une autre canalisation, les parties mâle et femelle pouvant être assemblées ou séparées à volonté, suivant une direction d'assemblage, l'introduction de la partie mâle dans la partie femelle assurant l'ouverture des clapets et la mise en communication des deux canalisations, tandis que la séparation des deux parties mâle et femelle entraîne la fermeture des clapets, la partie mâle et la partie femelle comportant respectivement deux surfaces conjuguées destinées à être traversées par le flux de fluide sous pression, lorsque le raccord est assemblé, ces surfaces conjuguées étant parallèles à la direction d'assemblage de la partie mâle et de la partie femelle (lorsque ces parties sont assemblées) et étant munies d'orifices correspondants dont les axes sont orientés sensiblement orthogonalement à la susdite direction d'assemblage, des moyens d'étanchéité étant prévus de part et d'autre de ces orifices, les clapets étant propres à coulisser suivant la direction axiale de la partie mâle et de la partie femelle.

Un raccord rapide de ce genre est connu d'après US-A-2 753 195. Dans ce raccord, un verrouillage mécanique est réalisé lors de l'introduction de la partie mâle dans la partie femelle par la coopération d'une bague élastique prévue sur la partie mâle et d'une gorge prévue sur la partie femelle; il faudra donc exercer un effort de traction non négligeable pour ouvrir ces moyens de verrouillage lorsque l'on souhaite séparer la partie mâle de la partie femelle. En outre, lors de l'assemblage de ces deux parties, il faudra également exercer un effort relativement important, notamment en raison de la présence de ressorts qui exercent des efforts suivant la direction axiale d'assemblage.

Il s'agit là d'un inconvénient pour ce type de raccord.

L'invention a pour but, surtout, de fournir un raccord rapide qui ne nécessite pratiquement aucun effort d'introduction de la partie mâle dans la partie femelle, lors de l'assemblage, ni pratiquement aucun effort de séparation de la partie mâle par rapport à la partie femelle.

Il est souhaitable, en outre, que ce raccord rapide soit d'un fonctionnement sûr.

DE-B-1 201 705 montre un raccord rapide, avec clapet, pour un compresseur d'air, raccord dans lequel l'assemblage entre la partie mâle et la partie femelle s'effectue simplement. Toutefois, un tel raccord est d'un emploi limité car la force de fermeture maintenant la partie femelle contre la partie mâle est assurée par le poids d'un appareil, un compresseur dans l'exemple considéré, relié à la partie femelle par une canalisation, tandis que la partie mâle est maintenue en position fixe par une autre canalisation, qui doit donc être rigide. Lorsque le raccord est assemblé, le flux de fluide sous pression a tendance à séparer la partie mâle de la partie femelle car ce flux s'écoule sensiblement suivant la direction d'assemblage et non pas à travers des orifices dont les axes sont sensiblement orthogonaux à la direction d'assemblage. En outre, les clapets comportent des ressorts destinés à assurer leur fermeture, de tels ressorts nécessitant une force d'ouverture.

Selon l'invention, un raccord rapide pour canalisation de fluide sous pression, notamment d'air comprimé, du genre défini précédémment, est caractérisé par le fait que chaque clapet comporte une tête élargie propre à venir en appui axial contre un moyen d'étanchéité pour la fermeture du clapet, la tête élargie du clapet déterminant, avec la surface intérieure d'un logement dans lequel cette tête peut se déplacer, un passage annulaire de section réduite propre à créer, lors d'un écoulement de fluide vers l'atmosphère dans la partie mâle ou femelle correspondante, lorsque les deux parties du raccord sont séparées, une perte de charge provoquant la fermeture du clapet, l'ensemble étant tel que, lors de l'assemblage de la partie mâle et de la partie femelle, une étanchéité est réalisée dans des conditions pour lesquelles le fluide sous pression ne développe pratiquement aucune force suivant la direction d'assemblage.

Ce clapet peut ainsi être dépourvu de tout ressort mécanique de rappel.

Un tel raccord rapide peut être destiné, en particulier, à permettre le gonflage initial du réservoir d'air comprimé d'un véhicule lourd par branchement de ce réservoir, à l'aide du raccord, sur une ligne d'alimentation en air comprimé provenant d'un poste fixe. On évite ainsi, en début de service du véhicule lourd d'avoir à faire tourner le moteur à combustion interne de ce véhicule uniquement pour gonfler le réservoir d'air comprimé.

La partie femelle comporte, de préférence, une douille fermée par un fond transversal, la surface conjuguée de la partie femelle étant constituée par la surface cylindrique intérieure de cette douille et les susdits orifices de la partie femelle étant constitués par des trous orientés radialement prévus dans la partie cylindrique de cette douille, tandis que la partie mâle comporte un embout cylindrique dont la surface cylindrique extérieure constitue la surface conjuguée de ladite partie mâle, les susdits orifices étant constitués par des trous radiaux prévus dans la paroi cylindrique de l'embout et débouchant dans une chambre située à l'intérieur dudit embout.

Les orifices prévus dans la douille ainsi que ceux prévus dans l'embout sont répartis suivant une couronne dont le plan moyen est orthogonal à l'axe de la douille ou de l'embout, c'est-à-dire à la direction d'assemblage; la douille comporte, de part et d'autre axialement de sa couronne d'orifices, une gorge annulaire destinée à recevoir un joint d'étanchéité notamment un joint torique coopérant avec la surface cylindrique extérieure de l'embout.

Cet embout peut comporter un piston faisant saillie à son extrémité introduite dans la douille, ce piston étant lié au clapet de l'embout de telle sorte que, lorsque l'embout vient en position d'assemblage dans la douille, le piston est repoussé par le fond transversal de la douille et commande l'ouverture du clapet de l'embout.

Le piston peut être formé par un organe tubulaire traversé de bout en bout par un passage longitudinal et communiquant, à son extrémité éloignée du fond transversal, avec une chambre reliée à l'atmosphère.

Le clapet d'étanchéité, pour la partie mâle, est avantageusement formé par une couronne solidaire du piston tubulaire.

La chambre dans laquelle débouche l'extrémité du piston tubulaire opposée au fond transversal de la douille, peut être formée par un alésage borgne ménagé dans une pièce munie d'au moins une canalisation radiale assurant la liaison de ladite chambre avec l'atmosphère, cette même pièce étant traversée par des canalisations longitudinales.

La douille de la partie femelle peut être montée, de manière étanche dans un manchon équipé du clapet, ce manchon étant muni de moyens de fixation sur une paroi, l'ensemble étant tel que la partie femelle ne déborde pratiquement pas vers l'extérieur de cette paroi.

L'invention vise également l'application d'un raccord rapide tel que défini précédemment, au gonflage initial du réservoir d'air comprimé d'un véhicule lourd; dans cette application, la partie femelle du raccord est fixée sur une paroi du véhicule, cette partie femelle étant raccordée au réservoir d'air comprimé du véhicule, tandis que la partie mâle du raccord est reliée à une canalisation souple d'arrivée d'air comprimé pour permettre le gonflage du réservoir d'air du véhicule.

L'invention consiste, mises à part les dispositions exposées ci-dessus, en certaines autres dispositions dont il sera plus explicitement question ci-après à propos d'un mode de réalisation particulier décrit avec référence aux dessins ci-annexés, mais qui n'est nullement limitatif.

La figure 1, de ces dessins, montre, en coupe axiale, la partie mâle et la partie femelle d'un raccord rapide selon l'invention, les deux parties mâle et femelle étant séparées l'une de l'autre.

La figure 2, enfin, montre également en coupe axiale le raccord rapide avec les parties mâle et femelle assemblées.

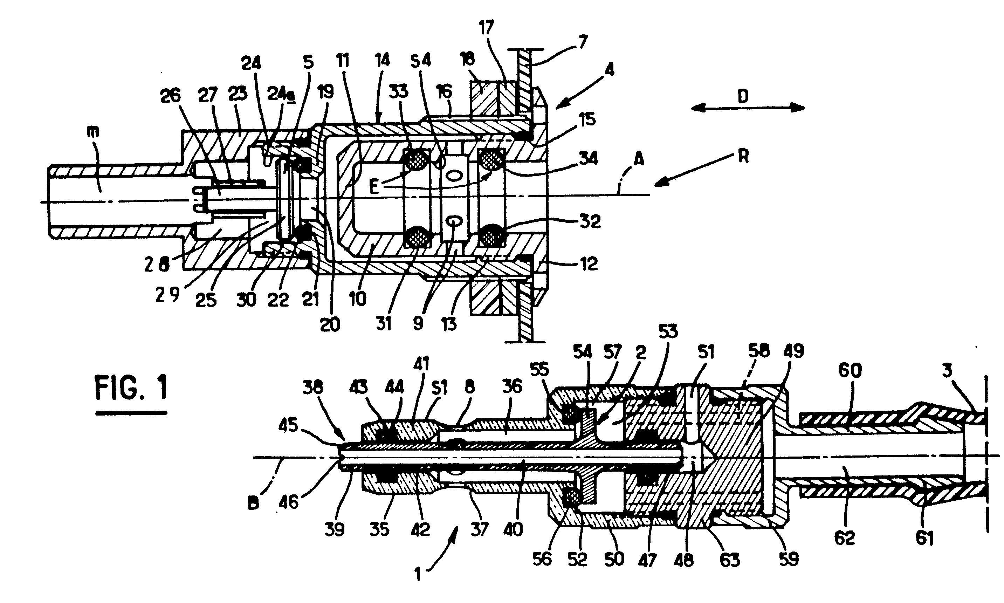

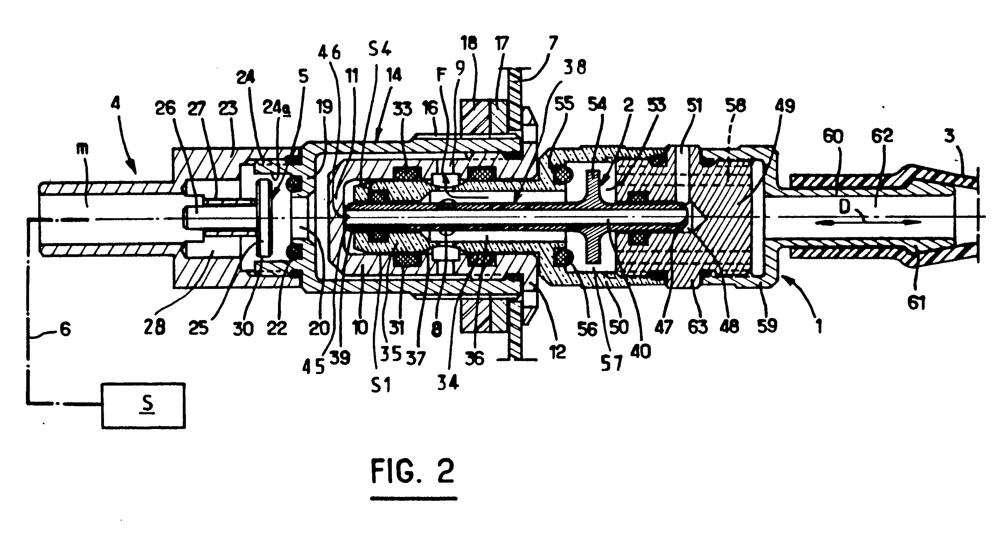

En se reportant aux dessins, et notamment à la figure 1, on peut voir un raccord rapide R, pour canalisation de fluide sous pression, comprenant une partie mâle 1 munie d'un clapet 2, reliée à une première canalisation 3, et une partie femelle 4 également munie d'un clapet 5, reliée à une autre canalisation 6 (figure 2).

Dans l'exemple de réalisation représenté, la partie femelle 4 est fixée sur une paroi 7 tandis que la partie mâle 1 est montée à l'extrémité d'une canalisation souple 3 de manière à pouvoir être aisément déplacée et introduite dans la partie femelle 4. Le montage inverse, c'est-à-dire partie mâle 1 fixée sur une paroi, et partie femelle 4 mobine, est naturellement possible. Toutefois, dans l'application particulière au gonflage initial du réservoir d'air comprimé d'un véhicule lourd, évoquée précédemment, il est avantageux de monter la partie femelle 4 sur une paroi extérieure 7 du véhicule, cette partie femelle 4, comme visible sur les dessins, et comme expliqué plus loin, étant agencée de manière à ne pas pratiquement déborder de la paroi 7.

Les parties mâle 1 et femelle 4 peuvent être assemblées ou séparées suivant une direction d'assemblage représentée par la double flèche D, par translation suivant cette direction.

La direction D est parallèle à l'axe A de la partie fixe du raccord; dans l'exemple envisagé, la partie fixe du raccord est la partie femelle 4, et la direction D est parallèle à l'axe A de cette partie femelle.

L'axe B de la partie mâle 1, au moment de l'assemblage des deux parties du raccord, est disposé dans le prolongement de l'axe A, et la partie mâle est introduite, par translation dans la partie femelle 4.

La partie mâle 1 et la partie femelle 4 comportent, respectivement, deux surfaces conjuguées S1, S4 destinées à être traversées par le fluux (figure 2) de fluide sous pression, lorsque le raccord est assemblé.

Les surfaces conjuguées S1, S4 sont parallèles, dans le raccord assemblé (figure 2), à la direction d'assemblage D de la partie mâle 1 et de la partie femelle. Comme visible sur les dessins et comme expliqué plus loin les surfaces conjuguées S1, S4 sont avantageusement formées par des surfaces cylindriques dont les génératrices sont parallèles respectivement à l'axe B et à l'axe A de la partie mâle et de la partie femelle.

Les surfaces S1, S4 sont munies d'orifices correspondants 8, 9 dont les axes sont orientés sensiblement orthogonalement aux axes B et A de la partie mâle et de la partie femelle, et donc sensiblement orthogonalement à la direction d'assemblage D lorsque les parties mâles et femelles sont en cours d'assemblage ou assemblées.

Des moyens d'étanchéité E sont prévus, pour établir, de part et d'autre des orifices 8 et 9, lorsque l'assemblage est réalisé, une étanchéité dans des conditions telles que le fluide sous pression ne développe pratiquement aucune force suivant la direction d'assemblage D. En pratique, les moyens d'étanchéité E établissent une étanchéité suivant deux diamètres égaux de telle sorte qu'aucune composante axiale due aux forces de pression n'apparaisse à ce niveau.

La partie femelle 4 comporte une douille 10

fermée par un fond transversal 11, la surface conjuguée S4 étant constituée par la surface cylindrique intérieure de cette douille. Les orifices 9 sont constitués par des trous orientés radialement prévus dans la partie cylindrique de la douille 10, et répartis suivant une couronne dont le plan moyen est orthogonal à l'axe A de la douille. A son extrémité opposée au fond 11, la douille 10 est munie d'une collerette 12 de plus fort diamètre, destinée à venir en appui contre la surface extérieure de la paroi 7. L'ensemble de la partie femelle 4 ne déborde de la paroi 7 que de l'épaisseur de la collerette 12.

La douille 10 est montée, notamment par vissage à l'aide de filets 13, dans un manchon 14 équipé du clapet 5. Le montage de la douille 10 dans le manchon 14 est effectué de manière étanche à l'aide d'un joint 15 disposé, juste en arrière de la collerette 12, entre la surface extérieure de la douille 10 et la surface intérieure du manchon 14.

Ce manchon 14 comporte, sur sa surface extérieure, au voisinage de la paroi 7, un filetage 16 permettant, à l'aide d'un écrou 17 et d'un contre-écrou 18, de serrer la paroi 7 entre la collerette 12 et lesdits écrous pour bloquer la partie femelle 4 sur cette paroi 7. Les moyens de fixation de la partie femelle 4 sur ladite paroi 7 sont donc formés par la combinaison de la collerette 12, du filetage 16 et des écrous 17 et 18.

Un passage annulaire subsiste entre la surface interne du manchon 14 et la surface externe de la douille 10 pour l'écoulement du fluide.

Le manchon 14 comporte, à son extrémité éloignée de la paroi 7, un siège 19 pour le clapet 5, ce siège délimitant un passage axial 20. Une gorge 21, munie d'un joint d'étanchéité 22 est prévue du côté du siège 19 opposé à la douille 10.

A son extrémité éloignée de la paroi 7, le manchon 14 est prolongé par un manchon auxiliaire 23 vissé, de manière étanche, sur un prolongement 24, fileté extérieurement, et de plus faible diamètre, du manchon 14.

Le clapet 5 comporte une tête élargie 25 propre à coulisser, suivant la direction axiale A de la partie femelle, à l'intérieur de l'alésage 24a du prolongement 24. La queue 26 du clapet 5 est guidée, pour le coulissement, par l'alésage d'un manchon cylindrique 27 prévu à l'intérieur du manchon 23 et coaxial à ce dernier. Des perçages longitudinaux 28 établissent une communication entre une chambre 29, dans laquelle se trouve la tête élargie 25 du clapet 5, et un passage axial m, prévu dans un embout prolongeant le manchon 23 et destiné à être relié à la canalisation 6 (figure 2).

La tête 25 du clapet 5 est propre à venir en appui axial contre le joint 22 constituant le moyen d'étanchéité pour la fermeture du clapet.

La tête élargie 5 détermine, avec la surface intérieure 24a du logement ou de l'alésage dans lequel cette tête peut se déplacer, un passage annulaire 31 de section réduite propre à créer, lors d'un écoulement de fluide du passage 30 vers l'atmosphère (c'est-à-dire de la gauche vers la droite selon la représentation de la figure 1) une perte de charge provoquant la fermeture du clapet 5, lorsque les deux parties 4 et 1 sont séparées.

Le clapet 5 est dépourvu de tout ressort mécanique destiné à le ramener contre son siège.

La douille 10 comporte, de part et d'autre axialement de sa couronne d'orifices 9, une gorge annulaire respectivement 31, 32, destinée à recevoir un joint d'étanchéité 33, 34, notamment un joint torique, propre à coopérer avec la surface conjuguée S1 de la partie mâle 1, lorsque cette dernière est introduite dans la partie femelle (voir figure 2).

La partie mâle 1 comporte un embout cylindrique 35 dont la surface cylindrique extérieure constitue la surface conjuguée S1; le diamètre extérieur de cet embout 35 est égal, au jeu de fonctionnement près, au diamètre intérieur de la douille 10. Les orifices 8 de la partie mâle 1 sont constitués par des trous radiaux prévus dans la paroi cylindrique de l'embout et débouchant dans une chambre 36 située à l'intérieur dudit embout 35. Les trous 8 sont prévus de préférence dans une gorge annulaire 37 ménagée à la périphérie de l'embout 35; la dimension de cette gorge 37, parallèlement à l'axe B de la partie mâle 1 est inférieure à la distance entre les plans moyens des gorges 31, 32, prévues dans la douille 10. Les trous 8 sont répartis suivant une couronne dont le plan moyen est orthogonal à l'axe B.

L'embout 35 comporte un piston 38 formé par un organe tubulaire 39 traversé par un passage longitudinal 40 de bout en bout. L'embout 35, à son extrémité destinée à être introduite en premier dans la douille 10, comporte une zone 41 de plus forte épaisseur munie d'un alésage 42 de guidage en coulissement du piston 38. Le diamètre de l'alésage 42 est égal, au jeu de coulissement près, au diamètre extérieur du piston 39; une gorge annulaire 43 est prévue dans cet alésage 42 pour recevoir un joint d'étanchéité s'appuyant contre la surface extérieure du piston 38. L'extrémité 45 du piston 38, destinée à pénétrer en premier dans la douille 10, fait saillie par rapport à l'embout 35; cette extrémité est munie d'échancrures telles que 46 propres à maintenir une communication entre le passage longitudinal 40 et une zone extérieure au piston 38, dans le cas où ce piston 38 est en appui contre une paroi transversale tel que le fond 11 de la douille 10 (figure 2). Le passage 40 débouche aux deux extrémités longitudinales du piston 38.

Le passage 40, à son extrémité 47 éloignée de l'extrémité 45, communique avec une chambre 48 formée par un trou borgne ménagé dans une pièce 49 montée de manière étanche dans un prolongement 50 de plus fort diamètre de l'embout 35. La chambre 48 est reliée à l'atmosphère, notamment par une ou plusieurs canalisations radiales telles que 51 décalées angulairement. Le piston 38 coulisse de manière étanche dans la chambre 48.

Le fond transversal de la pièce 49 tourné vers l'embout 35 est éloigné, suivant la direction axiale, du décrochement 52 assurant la transition entre l'embout 35 proprement dit et le prolongement 50 de plus fort diamètre. Une chambre 53 est ainsi déterminée entre ce décrochement 52 et la pièce 49 qui est généralement liée par vissage audit prolongement 50.

Le clapet d'étanchéité 2 est formé par une couronne 54 solidaire du piston 38 et située dans la chambre 53. Une gorge annulaire 55, s'ouvrant vers la pièce 49, est prévue dans le décrochement 52 de manière à recevoir un joint d'étanchéité 56, notamment un joint torique. La couronne 54 est propre à venir en appui, suivant la direction axiale, contre ce joint 56 pour assurer la fermeture du clapet. Cette couronne 54, qui constitue une tête élargie du clapet 2, détermine, avec la surface intérieure de la chambre ou logement 53, un passage annulaire 57 de section réduite propre à créer (comme le passage 30 du clapet 5), lors d'un écoulement de fluide vers l'atmosphère, une perte de charge provoquant l'application du clapet contre le joint 56.

La pièce 49 est traversée par des canalisations longitudinales 58 parallèles à la direction B de l'axe de la partie mâle 1, mais écartées radialement de cet axe. Du côté opposé à l'embout 35, la pièce 49 est rendue solidaire, de manière étanche, d'un manchon 59 muni d'un nez 60 de raccordement sur lequel peut être enfilé de manière étanche le tuyau 3. Lorsque le nez 60 est destiné, comme représenté sur le dessin, à coopérer avec un tuyau souple, un bourrelet 61 est prévu à l'extérieur, vers l'extrémité du nez, pour la réalisation de l'étanchéité. Le passage longitudinal 62 délimité par le nez 60 communique, grâce aux canalisations 58, avec le logement 53. Un épaulement annulaire 63 peut être prévu sensiblement à mi-longueur de la pièce 49 pour séparer les deux régions de cette pièce reliées respectivement au prolongement 50 et au manchon 59. La ou les canalisations 51 débouchent dans cet épaulement 63.

On peut noter que le clapet 2 ne comporte aucun ressort mécanique de rappel.

Le fonctionnement du raccord est le suivant.

Lorsque les deux parties mâle 1 et femelle 4 sont séparées, comme représenté sur la figure 1, les clapets 2 et 5 se ferment automatiquement de manière à empêcher toute fuite vers l'atmosphère.

En effet, en ce qui concerne la partie mâle 1, si un écoulement de fluide se produit dans le passage 57, de la chambre 53 vers les trous 8, la perte de charge créée par le passage annulaire 57 de section réduite établit, sur la face transversale de la couronne 54 tournée vers la chambre 53, une pression plus élevée sur l'autre face.

La couronne 54 est donc poussée, par la pression de fluide, en appui axial contre le joint 56 de manière à établir l'étanchéité.

Une explication semblable avait déjà été donnée au sujet du clapet 5 pour la partie femelle 4.

Lors de l'assemblage des deux parties du raccord (voir figure 2) l'embout 35 est introduit coaxialement, dans la douille 10, suivant la direction D.

La pénétration de l'embout 35 n'est pas freinée par l'air situé entre le fond transversal 11 de la douille 10 et le joint 33, puisque cet air peut s'échapper par le canal 40, la chambre 48 et la canalisation 51 vers l'atmosphère. Cette communication avec l'atmosphère subsiste même lorsque l'extrémité 45 du piston 38 est en appui contre le fond 11 grâce à la présence des échancrures 46.

En fin de course d'introduction, lorsque l'extrémité 45 du piston 38 est en appui contre le fond 11 de la douille 10, l'opérateur poursuit son mouvement de poussée sur la partie mâle 1. Dans ces conditions, l'embout 35 continue à se déplacer (vers la gauche selon la représentation des dessins) alors que le piston 38 est arrêté. La couronne 54 va donc s'écarter du joint 56, et l'air sous pression va s'écouler vers la chambre 36, et passer à travers les orifices 8 et 9 pour se diriger vers le passage 20. Le clapet 5 est alors repoussé par la pression d'air et l'écoulement de fluide sous pression s'effectue à travers les percages 28 et le passage jusqu'à la canalisation 6.

Dans cette position d'assemblage, comme visible sur la figure 2, la couronne des trous 8 de l'embout 35 est située axialement entre les joints 33 et 34 qui établissent une étanchéité, suivant une surface cylindrique de même diamètre, de part et d'autre de ladite couronne d'orifices 8.

Du fait que les surfaces suivant lesquelles est établie l'étanchéité ont même diamètre, il n'y a pas de composante axiale des forces de pression sur les deux pièces du raccord au niveau de cette étanchéité.

Pratiquement, l'assemblage du raccord s'effectue sans avoir à exercer un effort sensible.

La séparation des deux parties du raccord est réalisée en tirant simplement la partie mâle 1 suivant la direction D, vers la droite selon la représentation des dessins.

Lorsque les deux pièces sont séparées, une légère fuite d'air momentanée, au niveau de chaque clapet 2 et 5 assure la fermeture de ces clapets.

Aucun accrochage mécanique entre la partie mâle 1 et la partie femelle 4 n'est à prévoir pour maintenir assemblées les deux pièces.

Une application intéressante d'un tel raccord rapide concerne le gonflage initial du réservoir d'air comprimé S (figure 2) d'un véhicule lourd, notamment d'un autobus ou d'un autocar. La partie femelle 4 est montée sur une paroi 7, donnant vers l'extérieur, de ce véhicule. La canalisation 6 relie le passage m au réservoir S. On peut ainsi gonfler initialement le réservoir S en branchant la partie mâle 1 alimentée en fluide sous pression par la canalisation souple 3.

## Revendications

1. Raccord rapide pour canalisation de fluide sous pression, notamment d'air comprimé, comprenant une partie mâle (1) munie d'un clapet (2), reliée à une première canalisation (3) et une partie femelle (4), également munie d'un clapet (5) destinée à être reliée à une autre canalisation (6), les parties mâle et femelle pouvant être assemblées ou séparées à volonté, suivant une direction d'assemblage (D), l'introduction de la partie mâle dans la partie femelle assurant l'ouverture des clapets et la mise en communication des deux canalisations, tandis que la séparation des deux parties mâle et femelle entraîne la fermeture des clapets, la partie mâle (1) et la partie femelle (4) comportant respectivement deux surfaces conjuguées (S1, S4) destinées à être traversées par le flux de fluide sous pression, lorsque le raccord est assemblé, ces surfaces conjuguées (S1, S4) étant parallèles à la direction d'assemblage (D) de la partie mâle et de la partie femelle (lorsque ces parties sont assemblées) et étant munies d'orifices (8, 9) correspondants dont les axes sont orientés sensiblement orthogonalement à la susdite direction d'assemblage, des moyens d'étanchéité (33, 34) étant prévus de part et d'autre de ces orifices (8, 9), les clapets (2, 5) étant propres à coulisser suivant la direction axiale de la partie mâle et de la partie femelle, caractérisé par le fait que chaque clapet comporte une tête élargie (54, 25) propre à venir en appui axial contre un moyen d'étanchéité pour la fermeture du clapet, la tête élargie (54, 25) du clapet déterminant, avec la surface intérieure d'un logement dans lequel cette tête peut se déplacer, un passage annulaire (57, 30) de section réduite propre à créer, lors d'un écoulement de fluide vers l'atmosphère dans la partie mâle ou femelle correspondante, lorsque les deux parties du raccord sont séparées, une perte de charge provoquant la fermeture du clapet (2, 5), l'ensemble étant tel que, lors de l'assemblage de la partie mâle et de la partie femelle, une étanchéité est réalisée dans des conditions pour lesquelles le fluide sous pression ne développe pratiquement aucune force suivant la direction d'assemblage.

2. Raccord selon la revendication 1, caractérisé par le fait que la partie femelle (4) comporte une douille (10) fermée par un fond transversal (11), la surface conjuguée (S4) de la partie femelle étant constituée par la surface cylindrique intérieure de cette douille, les susdits orifices (9) de la partie femelle étant constitués par des trous orientés radialement prévus dans la partie cylindrique de cette douille (10), tandis que la partie mâle (1) comporte un embout cylindrique (35) dont la surface cylindrique extérieure constitue la surface conjuguée (S1) de ladite partie mâle, les susdits orifices (8), étant constitués par des trous radiaux dans la paroi cylindrique de l'embout et débouchant dans une chambre (36) située à l'intérieur dudit embout.

3. Raccord selon la revendication 2, caractérisé par le fait que les orifices (9) prévus dans la douille (10) et ceux (8) prévus dans l'embout (35) sont répartis suivant une couronne dont le plan moyen est orthogonal à l'axe (A) de la douille et à l'axe (B) de l'embout et par le fait que la douille (10) comporte, de part et d'autre axialement de sa couronne d'orifices (9), une gorge annulaire (31, 32) destinée à recevoir un joint d'étanchéité (33, 34), notamment un joint torique, coopérant avec la surface cylindrique extérieure de l'embout (35).

4. Raccord selon la revendication 2 ou 3, caractérisé par le fait que l'embout (35) comporte un piston (38) faisant saillie à l'extrémité dudit embout (35) destinée à être introduite en premier dans la douille (10), ce piston (38) étant lié au clapet (5) de l'embout de telle sorte que lorsque l'embout (35) vient en position d'assemblage dans la douille (10), le piston (38) est repoussé, par le fond transversal (11), relativement à l'embout (35) et commande l'ouverture du clapet (2) de la partie mâle.

5. Raccord selon la revendication 4, caractérisé par le fait que le piston (38) est formé par un organe tubulaire (39) traversé par un passage longitudinal (40) de bout en bout et communiquant, à son extrémité (47) éloignée du fond transversal, avec une chambre (48) reliée à l'atmosphère.

6. Raccord selon la revendication 5, caractérisé par le fait que le clapet d'étanchéité (2) pour la partie mâle comprend une couronne (54) solidaire du piston tubulaire (38).

7. Raccord selon la revendication 5 ou 6, caractérisé par le fait que la chambre (48) dans laquelle débouche l'extrémité (47) du piston (38), opposée au fond transversal (11) de la douille (10), est formée par un alésage borgne menagé dans une pièce (49) munie d'une canalisation radiale (51) assurant la liaison de ladite chambre (48) avec l'atmosphère, cette même pièce (49) étant traversée par des canalisations longitudinales (58).

8. Raccord selon l'une quelconque des revendications précédentes, caractérisé par le fait que la douille (10) de la partie femelle (4) est montée, de manière étanche, dans un manchon (14) équipé du clapet (5), ce manchon étant muni de moyens de fixation (16, 17, 18) sur une paroi (7), l'ensemble étant tel que la partie femelle (4) ne déborde pratiquement pas vers l'extérieur de cette paroi.

9. Application d'un raccord rapide selon l'une quelconque des revendications précédentes, au gonflage initial du réservoir d'air comprimé d'un véhicule lourd, caractérisée par le fait que la partie femelle (4) du raccord est fixée sur une paroi (7) du véhicule, cette partie femelle étant raccordée au réservoir d'air comprimé tandis que la partie mâle (1) est reliée à une canalisation souple (3) d'arrivée d'air comprimé pour permettre de gonfler le réservoir sans qu'il soit nécessaire de faire tourner le moteur du véhicule.

**Patentansprüche**

1. Schnellkupplung für Leitungen von Druckflüssigkeiten, insbesondere von Druckluft, bestehend aus einem mit einer Ventilklappe (2) ausgerüsteten männlichen Teil (Einschubteil) (1), der mit einer ersten Leitung (3) verbunden ist, und einem ebenfalls mit einer Ventilklappe (5) ausgerüsteten weiblichen Teil (Überschubteil) (4), der zur Verbindung mit einer anderen Leitung (6) bestimmt ist, wobei der Einschub- und der Überschubteil gemäß einer Verbindungsrichtung (D) beliebig verbunden oder getrennt werden können, wobei das Einführen des Einschubteiles in den Überschubteil das Öffnen der Klappen und die Verbindung der beiden Leitungen gewährleistet, während die Trennung der beiden Einschub- und Überschubteile zum Schließen der Klappen führt, wobei der Einschubteil (1) und der Überschubteil (4) jeweils zwei konjugierte Flächen (S1, S4) aufweisen, die, wenn die Kupplung zusammengefügt ist, von der Druckflüssigkeit durchflossen werden, wobei diese konjugierten Flächen (S1, S4) parallel zur Verbindungsrichtung (D) des Einschubteiles und des Überschubteiles liegen (wenn diese Teile verbunden sind, und mit entsprechenden Öffnungen (8, 9) versehen sind, deren Achsen orthogonal zur genannten Verbindungsrichtung ausgerichtet sind, wobei Dichtungsmittel (33, 34) zu beiden Seiten dieser Öffnungen (8, 9) vorgesehen sind, wobei die Klappen (2, 5) in axialer Richtung des Einschub- und des Überschubteiles gleiten können, dadurch gekennzeichnet, daß jede Klappe einen verbreiterten Oberteil (54, 25) aufweist, der sich zum Schließen der Klappe axial gegen ein Dichtungsmittel abstützt, wobei der verbreiterte Oberteil (54, 25) der Klappe mit der Innenfläche eines Lagers, in welchem dieser Oberteil verschoben werden kann, einen ringförmigen Durchlaß (57, 30) kleinen Querschnitts bestimmt, welcher beim Austritt von Flüssigkeit an die Luft im entsprechenden Einschub- oder Überschubteil, wenn die beiden Teile der Kupplung getrennt sind, einen Druckverlust hervorruft, der zum Schließen der Klappe (2, 5) führt, wobei die Einheit so gestaltet ist, daß beim Verbinden des Einschubteiles und des Oberschubteiles eine Dichtheit unter Bedingungen entsteht, bei welchen die Druckflüssigkeit praktisch keinerlei Kraft in der Verbindungsrichtung entwickelt.

2. Kupplung gemäß Anspruch 1, dadurch gekennzeichnet, daß der Überschubteil (4) eine von einem Querteil (11) verschlossene Buchse (10) beinhaltet, wobei die konjugierte Fläche (S4) des Überschubteiles aus der zylindrischen Innenfläche dieser Buchse gebildet wird, wobei die genannten Öffnungen (9) des Überschubteiles aus radial ausgerichteten, im zylindrischen Teil dieser Buchse (10) vorgesehenen Löchern bestehen, während der Einschubteil (1) einen zylindrischen Ansatz (35) besitzt, dessen zylindrische Außenfläche die konjugierte Fläche (S1) des genannten Einschubteiles bildet, wobei die genannten Öffnungen (8) aus radialen Löchern in der zylindrischen Wand des Ansatzes gebildet werden und in eine im Inneren des genannten Ansatzes liegende Kammer (36) münden.

3. Kupplung gemäß Anspruch 2, dadurch gekennzeichnet, daß die in der Buchse (10) und im Ansatz (35) vorgesehenen Öffnungen (9, 8) kranzförmig verteilt sind, wobei die Mittelebene dieses Kranzes orthogonal zur Achse (A) der Buchse und zur Achse (B) des Ansatzes verläuft und dadurch, daß die Buchse (10) axial zu beiden Seiten ihres Öffnungskranzes (9) eine Ringnut (31, 32) zur Aufnahme einer Dichtung (33, 34), insbesondere eines O-Ringes, aufweist, welche mit der äußeren zylindrischen Fläche des Ansatzes (35) zusammenwirkt.

4. Kupplung gemäß Anspruch 2 oder 3, dadurch gekennzeichnet, daß der Ansatz (35) einen am Ende des genannten Ansatzes (35), das zuerst in die Buchse (10) eingeführt wird, vorstehenden Kolben (38) aufweist, wobei dieser Kolben (38) mit der Klappe (5) des Ansatzes so verbunden ist, daß der Kolben (38), wenn der Ansatz (35) in der Buchse (10) in die Verbindungsstellung kommt, durch den Querteil (11), bezogen auf den Ansatz (35), zurückgedrängt wird und das Öffnen der Klappe (2) des Einschubteiles steuert.

5. Kupplung gemäß Anspruch 4, dadurch gekennzeichnet, daß der Kolben (38) aus einem rohrförmigen Teil (39) mit durchgehendem Längsdurchgang (40) gebildet wird und an seinem vom Querteil entfernten Ende (47) mit einer mit der freien Luft verbundenen Kammer (48) in Verbindung steht.

6. Kupplung gemäß Anspruch 5, dadurch gekennzeichnet, daß die Dichtungsklappe (2) für den Einschubteil einen mit dem rohrförmigen Kolben (38) verbundenen Kranz (54) umfaßt.

7. Kupplung gemäß Anspruch 5 oder 6, dadurch gekennzeichnet, daß die Kammer (48), in welche das dem Querteil (11) der Buchse (10) gegenüberliegende Ende (47) des Kolben (38) mündet, aus einer Blindbohrung gebildet wird, die in ein mit einer Radialleitung (51) versehenes Teil (49) eingelassen ist und die Verbindung der genannten Kammer (48) mit der freien Luft gewährleistet, wobei ebendieses Teil (49) von Längsleitungen (58) durchquert wird.

8. Kupplung gemäß einem der vorstehenden Ansprüche, dadurch gekennzeichnet, daß die Buchse (10) des Überschubteiles (4) dicht in einer mit der Klappe (5) ausgerüsteten Muffe (14) montiert ist, wobei diese Muffe auf einer Wand (7) mit Befestigungsmitteln (16, 17, 18) versehen ist, wobei die Einheit so beschaffen ist, daß der Überschubteil (4) praktisch nicht nach außen über diese Wand hinausragt.

9. Verwendung einer Schnellkupplung gemäß einem der vorstehenden Ansprüche zum anfänglichen Füllen des Druckluftbehälters eines Schwerfahrzeuges, dadurch gekennzeichnet, daß der Überschubteil (4) der Kupplung an einer Wand (7) des Fahrzeuges befestigt ist, wobei dieser Überschubteil mit dem Druckluftbehälter verbunden ist, während der Einschubteil (1) mit einer flexiblen Druckluftzuführungsleitung (3) verbunden ist, um das Füllen des Behälters zu ermöglichen, ohne daß es notwendig ist, den Motor des Fahrzeuges laufen zu lassen.

**Claims**

1. Quick-release coupling for pipes for pressurised fluid, in particular compressed air, comprising a male part (1) provided with a valve (2), connected to a first pipe (3) and a female part (4), also provided with a valve (5) and adapted to be connected to a second pipe (6), the male and female parts being assembled or separated as desired in a direction of assembly (D), such that the valves are opened and the two pipes are connected when the male part is inserted into the female part, whereas the valves are closed when these two male and female parts are separated, the male part (1) and the female part (4) comprising respectively two mating surfaces (S1, S4) adapted to be traversed by the flow of pressurised fluid, when the coupling is assembled, these mating surfaces (S1, S4) being parallel to the direction of assembly (D) of the male part and the female part (when these parts are assembled) and being provided with corresponding ports (8, 9), the axes of which extend substantially at right angles to the above-mentioned direction of assembly, sealing means (33, 34) being provided on both sides of these ports, the valves (2, 5) being adapted to slide in the axial direction of the male part and the female part, characterised in that each valve comprises an enlarged head (54, 25) adapted to bear axially against sealing means for closing the valve, the enlarged head (54, 25) of the valve defining, by means of the inner surface of a housing within which this head is movable, an annular passage (57, 30) of reduced section adapted to produce a drop in pressure causing the valve (2, 5) to close whenever fluid flows towards the atmosphere in the corresponding male or female part when the two parts of the coupling are separated, the assembly being such that when the male part and the female part are assembled, sealing is effected under conditions such that the pressurised fluid exerts practically no force in the direction of assembly.

2. Coupling according to claim 1, characterised in that the female part (4) comprises a socket (10) closed by a transverse base (11), the mating surface (S4) of the female part being constituted by the inner cylindrical surface of this socket, the above-mentioned ports (9) of the female part being constituted by radially oriented holes provided in the cylindrical part of this socket (10), while the male part (1) comprises a cylindrical nipple (35) the external cylindrical surface of which constitutes the mating surface (S1) of the said male part, the said ports (8) being constituted by radial holes in the cylindrical wall of the nipple and opening into a chamber (36) situated in the interior of the said nipple.

3. Coupling according to claim 2, characterised in that the ports (9) provided in the socket (10) and those (8) provided in the nipple (35) are distributed in a ring, the central plane of which is perpendicular to the axis (A) of the socket and to the axis (B) of the nipple, and the socket (10) comprises axially on both sides of its ring of ports (9) an annular groove (31, 32) for receiving a seal (33, 34), in particular an O-ring, cooperating with the external cylindrical surface of the nipple (35).

4. Coupling according to claim 2 or 3, characterised in that the nipple (35) comprises a piston (38) projecting out at the end of the said nipple (35) adapted to be inserted first in the socket (10), this piston (38) being connected to the valve (5) of the nipple in such a way that when the nipple (35) is moved into the position of assembly in the socket (10), the piston (38) is pushed back with respect to the nipple (35) by the transverse base (11) and opens the valve (2) of the male part.

5. Coupling according to claim 4, characterised in that the piston (38) is formed by a tubular member (39) traversed from beginning to end by a longitudinal passage (40) and communicating at the end (47) remote from the transverse base with a chamber (48) in communication with the atmosphere.

6. Coupling according to claim 5, characterised in that the sealing valve (2) for the male part comprises a collar (54) integral with the tubular piston (38).

7. Coupling according to claim 5 or 6, characterised in that the chamber (48) into which the end (47) of the piston (38) opens, opposite the transverse base (11) of the socket (10), is formed by a blind bore disposed in a part (49) provided with a radial pipe (51) connecting the said chamber (48) with the atmosphere, this same part (49) being traversed by longitudinal passageways (58).

8. Coupling according to any one of the preceding claims, characterised in that the socket (10) of the female part (4) is mounted in a sealed manner within a sleeve (14) equipped with the valve (5), this sleeve being provided with means (16, 17, 18) for fastening it on to a surface (7), the assembly being such that the female part (4) scarcely projects out to any extent towards the exterior of this surface.

9. Use of a quick-release coupling according to any one of the preceding claims in the initial filling of a container of compressed air of a heavy vehicle, characterised in that the female part (4) of the coupling is fixed on to a surface (7) of the vehicle, this female part being connected to the container of compressed air while the male part (1) is connected to a flexible pipe (3) supplying compressed air so that it is possible to fill the container without starting up the engine of the vehicle.

FIG. 1

FIG. 2

EP 0 180 503 B1